# EUROPEAN PATENT APPLICATION

(11) **EP 2 883 834 A1**
(43) Date of publication of application: **17.06.2015**
(21) Application number: 13196519.6
(22) Date of filing: 10.12.2013
(51) Int. Cl.: C01B 3/04, C01B 17/02, C01B 17/04

(54) **Hydrogen sulfide conversion**

(71) Applicant: Nederlandse Organisatie voor toegepast- natuurwetenschappelijk onderzoek TNO, 2595 DA 's-Gravenhage (NL)
(72) Inventor: van der Ham, Leonardus Volkert, 2628 VK Delft (NL); Goetheer, Earl Lawrence Vincent, 2628 VK Delft (NL)
(74) Representative: Jansen, Cornelis Marinus

(57) **Abstract**

The invention relates to a process for treating a feed stream comprising hydrogen sulfide to produce hydrogen and sulfur.

The process of the invention comprises:
a) contacting said feed stream with a liquid phase comprising a diatomic halogen compound dissolved in an organic solvent and reacting hydrogen sulfide with said diatomic halogen compound thereby producing hydrogen halide and sulfur in a fluid stream comprising said organic solvent,
b) dissociating produced hydrogen halide to provide a mixture comprising hydrogen and a diatomic halogen compound,
c) separating hydrogen from said mixture and collecting hydrogen as product, and
d) separating sulfur from a process stream comprising sulfur and organic solvent, and collecting sulfur as product.

## Description

The invention relates to a process for treating a feed stream comprising hydrogen sulfide to produce hydrogen and sulfur.

Hydrogen sulfide (H₂S) is often obtained as by-product in the processing of natural gas and refining high-sulfur crude oils. Oil and gas industries produce increasing amounts of H₂S because of the increasing H₂S content of the remaining sour oil and gas fields and because the ever more strict requirements for hydro-desulfurization of crude oil. The price of elemental sulfur is decreasing and options to increase revenue from the H₂S byproduct stream are required. The most common method of handling a H₂S stream is to produce elemental sulfur via the Claus process. The Claus process yields elemental sulfur and water. A disadvantage of the Claus process is the inefficient use of the released energy, and the high process complexity. Moreover, the Claus process is not very good in removal of sulfur contaminants other than H₂S. In addition, an additional plant is required for hydrodesulfurization to supply H₂. Therefore, a need exist for energy efficient processes for conversion of hydrogen sulfide (and other sulfur compounds) to elemental sulfur and valuable hydrogen gas. The produced hydrogen gas can be used for example in a hydrodesulfurization process.

A process for producing hydrogen and sulfur from hydrogen sulfide is described in US-B-4 094 962. This process comprises (a) contacting hydrogen sulfide and iodine in an aqueous solution of hydriodic acid, to thereby form an aqueous suspension of sulfur further comprising hydrogen iodide, (b) recovering sulfur from the suspension, (c) desorbing hydrogen sulfide, (d) rectifying in a distillation column the residual solution at superatmospheric pressure, to thereby recover hydrogen iodide and an aqueous solution of hydrioidic acid having a content of hydrogen iodide equal to or higher than that of the water-hydrogen iodide azeotrope at the operating pressure and recycling said aqueous solution to step (a) and, further comprising forming hydrogen and iodine by thermal dissociation of the hydrogen iodide at a temperature of at least 400 °C. A disadvantage of the process of US-B-4 094 962 is the limited energy efficiency.

US-A-3 607 004 describes a process for eliminating traces of hydrogen sulfide using a liquid phase containing iodine dissolved in an organic solvent, for example sulfoxides, and regeneration of the iodine solution using oxidation using an oxidizer such as sodium hypochlorite. Obtaining hydrogen as product is not disclosed.

US-A-4 592 905 describes a process for conversion of H₂S to H₂ using antraquinone dissolved in a polar organic solvent. The compounds used in this process have limited chemical stability. Especially during the hydrogen production step of the process, the undesired conversion of anthraquinones to anthrones can take place.

Disadvantages of prior art processes, in particular process using water as solvent, include low purity of the sulfur product, high solvent loss during the contacting with a feed stream and relatively low solubility of hydrogen sulfide, diatomic halogen compound and hydrogen halide.

Objective of the present invention is to provide a process for producing hydrogen and sulfur from hydrogen sulfide addressing the above-mentioned disadvantages at least in part. The present inventors have found that this objective can be met by using a particular type of solvent.

Therefore, the invention relates in a first aspect to a process for treating a feed stream comprising hydrogen sulfide to produce hydrogen and sulfur, comprising:
a) contacting said feed stream with a liquid phase comprising a diatomic halogen compound dissolved in an organic solvent and reacting hydrogen sulfide with said diatomic halogen compound thereby producing hydrogen halide and sulfur in a fluid stream comprising said organic solvent,
b) dissociating produced hydrogen halide to provide a mixture comprising hydrogen and a diatomic halogen compound,
c) separating hydrogen from said mixture and collecting hydrogen as product, and
d) separating sulfur from a process stream comprising sulfur and organic solvent, and collecting sulfur as product.

Important advantages of the process of the invention include the improved energy efficiency and good effective reaction kinetics.

Further advantages provided by the invention include increased flexibility with respect to the used chemicals and the process design, the possibility for co-removal of sulfur components other than H₂S, obsoleting the need for a separate sulfur tail-gas treatment step, and that H₂ is obtained as product. H₂ is a valuable and versatile energy carrier and bulk chemical. Therefore, the process of the invention can also be described as a process for producing H₂ from H₂S. Suitably, the value of the H₂ product stream may compensate for the energy input required compared to the Claus process.

Without wishing to be bound by way of theory, it is believed that the use of an organic solvent, preferably an aprotic solvent, allows for an interaction between dissolved hydrogen halide and the solvent molecules that enables a more efficient step of dissociation of hydrogen halide into hydrogen and a diatomic halogen compound, for example because of a more energy efficient and/or more complete separation of hydrogen halide from the solvent. In addition, these solvents advantageously allow for a high solubility of H₂S, diatomic halogen, and hydrogen halide, combined with a low solubility of elemental sulfur. Compared with processes using anthraquinones as reactive intermediates, halogen compounds advantageously have higher solubilities, provide higher reaction rates, are less expensive, and have a higher chemical stability.

The term "diatomic halogen compounds" as used herein refers to X₂, wherein X represents F, Cl, Br or I, and the dissolved species of these compounds. Diatomic halogen compounds is used interchangeable with elemental halogen compounds. A dissolved diatomic halogen compound can be present in a liquid phase as a trihalide anion, X₃⁻, in particular as I₃⁻ in case of iodine as halogen.

The term hydrogen halide refers to HX, wherein X represents F, Cl, Br or I, and the dissolved species of these compounds.

The process is directed to the net splitting of hydrogen sulfide in hydrogen and sulfur:

H₂S → H₂ + S (1)

The process involves a chemical cycle using a halogen as reaction intermediate, preferably a thermochemical cycle using iodine as reaction intermediate, giving the following two reactive steps of the process:

H₂S +X₂ → 2 HX + S (2)

2 HX → X₂ + H₂ (3)

wherein X represents a halogen. Step 1 is carried out in an organic solvent. Between step 1 and 2, typically elemental S is removed from the process stream and preferably HX is separated from the solvent with high energy efficiency. Reaction 2 preferably involves thermal decomposition. The process can be carried out as a batch process or as a continuous process, preferably as a continuous process.

Preferably, the halogen is selected from the group consisting of bromine and iodine, more preferably, the halogen is iodine.

The process comprises contacting a feed stream comprising hydrogen sulfide with a liquid phase comprising a diatomic halogen compound dissolved in an organic solvent. The feed stream may comprise, in addition to hydrogen sulfide, for example mercaptan compounds, methane, carbon dioxide and/or water. The feed stream is preferably gaseous. For example, the feed stream may be an acid gas stream. An acid gas feed stream typically comprises 60-70 % hydrogen sulfide and 30-40 % carbon dioxide. The feed stream may also comprise synthesis gas or natural gas that comprises hydrogen sulfide ("sour gas"). Optionally, the feed stream is pre-treated before being subjected to the process of the invention. Alternatively, the process of the invention can comprise a pre-treatment of a feed stream. A typical pre-treatment comprises heating or cooling the feed stream.

The contacting of the feed stream with a liquid phase is preferably carried out in a gas-liquid contactor wherein the two phases can be brought into contact with each other, for example in co-current or counter-current flow. For example, a gaseous feed stream can be washed with a stream of washing liquid comprising a dissolved diatomic halogen compound. The liquid phase may also be sprayed in the feed stream. The gaseous feed stream may also be bubbled through a solution of a diatomic halogen compound in the organic solvent. The residence time of a gaseous feed stream can for example be between 1 second and 10 minutes. The residence time of the liquid phase can for example be between 1 second to 10 minutes. Typically, during the contacting, the feed stream has a temperature of 10-50 °C and a pressure between 1 bar and 100 bar and the liquid phase has a temperature of 0-50 °C. The feed stream can also be a liquid feed stream, for example a liquid comprising dissolved or absorbed hydrogen sulfide, preferably immiscible with the liquid phase. Preferably, the liquid phase comprises the dissolved diatomic halogen compound in a concentration of more than 0.5 mol/liter solvent, preferably more than 1 mol/liter, and most preferably more than 5 mol/liter. The liquid phase may comprise small amounts undissolved diatomic halogen compound.

In the process, hydrogen sulfide is converted into elemental sulfur. Suitable reaction conditions for the reaction of hydrogen sulfide with a dissolved diatomic halogen compound include a temperature in the range of 5-50 °C, for example 30-40 °C.

The process can for example involve absorption of hydrogen sulfide from a gaseous feed stream into the liquid phase, followed by a reaction between absorbed hydrogen sulfide and dissolved diatomic halogen compound. The process may also comprise a reaction between gaseous hydrogen sulfide and a dissolved diatomic halogen compound at an interface between the liquid phase and a gaseous phase comprising hydrogen sulfide, for example a gaseous feed stream. The formed elemental sulfur typically precipitates in the organic solvent.

Preferably, the feed stream is gaseous and comprises hydrogen sulfide in an amount of 1-100 mol%, typically 50-99 mol%. Preferably, the process comprises reducing the hydrogen sulfide content of the feed stream to provide a treated stream comprising hydrogen sulfide in an amount of less than 100 ppm by volume and/or in a concentration of less than 10 % of the concentration of hydrogen sulfide in the feed stream, more preferably less than 10 ppm by volume and/or less than 1 % of said concentration. This treated stream can be referred to as lean product stream or sweetened gas stream, in particular if the feed stream is a sour gas stream.

The process optionally comprises subjecting the treated stream to a post-treatment to selectively remove halogen compounds, in particular hydrogen halide compounds, from the treated gas stream, for example by reactive adsorption. In particular, the treated gas stream can be exposed to a reactive adsorbent such as CaO to remove these halogen compounds. The spent reactive adsorbent can be regenerated, for example with a source of oxygen. Other suitable post-treatments for the treated stream include condensing vapors such as to remove organic solvent, scrubbing such as to regenerate iodine compounds and cooling.

The feed stream may comprise mercaptan compounds comprising a carbon-bonded sulfhydryl group (R-SH, where R represents an alkane, alkene, or other carbon-containing group of atoms). The process of the invention preferably reduces the mercaptan content of the feed stream by 90 % or more, relative to the initial mercaptan content of the feed stream. The mercaptan compounds can be absorbed in the liquid phase and may react with the dissolved diatomic halogen compound, typically to form a disulfide product that can then be removed from the fluid process stream.

The reaction of hydrogen sulfide with the dissolved diatomic halogen compound yields a fluid stream comprising hydrogen halide, organic solvent and sulfur. The fluid stream typically also comprises unreacted diatomic halogen compound. For example, the fluid stream may comprise hydrogen halide dissolved in organic solvent and elemental sulfur suspended in the organic solvent. This stream is at some stage of the process subjected to removal of sulfur from the stream, and optionally to separation of the hydrogen halide from the organic solvent, in any order. Typically, the sulfur is first removed and thereafter the hydrogen halide is separated from the organic solvent.

The process comprises separating sulfur from a process stream comprising sulfur and organic solvent and collecting sulfur as product. At least part of the formed sulfur is separated from other components of a process streams and is obtained as product. The step of separating sulfur can be included in the process upstream or downstream of a step of separating hydrogen halide from the fluid stream. For example, sulfur can be separated from organic solvent by filtration, sedimentation, settling, decanting and/or centrifugation.

Separating sulfur from a process stream typically comprises separating an input process stream comprising sulfur and organic solvent in two streams having a different chemical composition, a first stream having a higher concentration of sulfur than the input process stream and a second stream having a higher concentration of solvent and lower concentration of sulfur, than the input process stream, and preferably than the first stream.

The obtained sulfur product can be further purified, for example be washed and/or dried. Typically, the sulfur product stream initially comprises solvent which is separated from the sulfur. For example, the sulfur product stream can be a slurry comprising sulfur that can be separated using a centrifugal filter. The recovered solvent is preferably recycled and added back to the process, typically directly upstream of the step of contacting with the feed stream. The obtained sulfur typically comprises elemental sulfur and is typically a solid material. Sulfur can be obtained in the form of a powder. The obtained sulfur product can be packaged, stored and/or transported.

Preferably, the process comprises separating hydrogen halide from organic solvent in the fluid stream. This step is particularly preferred when thermal decomposition of the hydrogen halide is used. The hydrogen halide compound and the organic solvent are preferably separated between the two reactive steps of the process. Typically, this step is carried out after elemental sulfur is removed from the fluid stream. The separation step preferably comprises heating and/or flashing of the process stream, distillation and/or a membrane separation process. Reactive pathways, such as hydrogenation and dehydrogenation, can also be used, for example the hydrogenation of benzene to cyclohexane and the subsequent dehydrogenation of cyclohexane to benzene. Separation of hydrogen halide from the organic solvent can also be combined with dissociation of hydrogen halide in a single step, for example using an electrochemical reaction step or the above mentioned reactive pathways.

The step of separating hydrogen halide from organic solvent results in a stream rich in hydrogen halide. Accordingly, the separation step typically results in two streams having a different chemical composition, a first stream having a higher concentration of hydrogen halide than the fluid stream prior to the separation step, and a second stream having a lower concentration of hydrogen halide than said fluid stream. The first stream is typically gaseous and the second stream is typically liquid. The first stream preferably comprises hydrogen halide in a concentration of 70-100 mol.%, for example 75-95 mol%. The first stream may comprise solvent vapor and small amounts of diatomic halogen compound. Using an organic solvent advantageously allows a hydrogen halide rich stream to be obtained with a concentration of hydrogen halide higher than in the azeotrope of the hydrogen halide and water. This advantageously allows for a simplified process design and improved energy efficiency.

A preferred process comprises separating produced hydrogen halide from said organic solvent in said fluid stream by distillation, thereby providing a stream rich in hydrogen halide, which stream is gaseous and comprises hydrogen halide in an amount of 70-100 mol%, for example 80-99 mol% and which is subjected to said step of dissociating produced hydrogen halide.

The process comprises dissociation of produced hydrogen halide in a diatomic halogen compound and hydrogen. The produced hydrogen halide is decomposed at least partly into these compounds. In this way, a mixture comprising hydrogen and a diatomic halogen compound is provided. The mixture can further comprise unreacted hydrogen halide. Preferably, hydrogen gas (H₂) is formed. The dissociation reaction is typically carried out in a gaseous stream comprising hydrogen halide. The dissociation reaction can also be carried out in a liquid stream comprising dissolved hydrogen halide, for example in case of electrochemical dissociation. In case the dissociation is carried out in solution, the dissociation may result in dissolved species of the diatomic halogen compound. The dissociation reaction preferably involves the decomposition of hydrogen halide into the diatomic halogen compound and hydrogen gas. Preferably, 90 mol% or more of the hydrogen halide is converted into a diatomic halogen compound and hydrogen gas by the dissociation step, even more preferably 95 mol% or more. Such fractions of converted hydrogen halide can for example be obtained by using a plurality of reaction chamber in series with removal of hydrogen product and/or diatomic halogen product from the reaction mixture in between and by using in-situ removal of reaction products.

Suitable methods for the dissociation include photochemical, electrochemical, catalytic and/or thermal dissociation, or combinations thereof. The dissociation preferably involves an energy input in the form of heat, light and/or electrical energy.

Preferably, the dissociation comprises thermal dissociation. Preferably, the step of dissociating hydrogen halide comprises thermal decomposition, optionally using a catalyst, yielding a diatomic halogen compound and hydrogen gas. In order to avoid heating a large amount of organic solvent to the temperatures needed for thermal decomposition, preferably the concentration of hydrogen halide is increased of the stream to be subjected to thermal decomposition of hydrogen halide.

The thermal decomposition of the hydrogen halide is preferably catalyzed. The thermal decomposition preferably involves catalytic thermal decomposition using a catalyst. Preferred metals for the catalyst include transition metals, for example nickel, such as Raney nickel, and noble metals, including palladium, platinum, rhodium, iridium, ruthenium, and osmium, typically on a suitable support for example carbon, alumina or silica. Preferred catalyst include a support structure such as for example activated carbon or (gamma-)alumina, possibly supporting metal particles such as for example palladium, platinum, and/or nickel. The catalyst preferably comprises a hydrogen-permeable membrane exposed on one side to the stream rich in hydrogen halide, exposing catalytically active metal particles, and exposed at the opposite side to a chamber for the collection of the hydrogen gas product stream. In this way, the catalyst can also contribute to separation of produced hydrogen gas from the reaction mixture.

The process typically comprises heating the stream rich in hydrogen halide, directly prior to or as part of the thermal decomposition, to increase the temperature of said stream by 50 °C or more, more preferably 100 °C or more or 200 °C or more. Particularly preferred is the combination of separating hydrogen halide as gaseous product by distillation, dissociation of hydrogen halide by thermal decomposition and a heating step between the distillation and the dissociation step. This combination provides as advantage a high energy efficiency, in particular with organic solvents, especially aprotic solvents. The stream rich in hydrogen halide is typically heated to a temperature of 200 °C or more, often 400-700 °C and then contacted at a temperature in these ranges with a catalyst for the dissociation of hydrogen halide. Preferably, the dissociation is carried out at a pressure of 1-120 bar, such as 1-100 bar, 10-100 bar, or 30-90 bar.. Preferably, the stream that is heated by these amounts or to these temperatures comprises 70-100 mol% hydrogen halide, more preferably 90-100 mol%. The process may also comprise heating the reaction mixture to these temperatures. The dissociation step preferably comprises continuous removal of H₂ and diatomic halogen compound from a reaction mixture in order to shift the equilibrium. The process may comprise recycling of a stream comprising hydrogen halide back to the dissociation step, after removal of halogen compound and hydrogen gas from the stream.

Preferably, heating the stream rich in hydrogen halide comprises indirect heat exchange with the stream of diatomic halogen compound and/or the stream of hydrogen gas obtained from the dissociation step.

The process comprises separating hydrogen from said mixture and collecting hydrogen as product. At least part of the formed hydrogen is separated from said mixture and obtained as product. The separation of hydrogen from the mixture may comprise selective diffusion of hydrogen through a membrane and/or wall to separate hydrogen from the mixture, for example through an inorganic membrane. Herein, the membrane or wall used for separation has a higher permeability for hydrogen than for the halogen compounds and other components of the mixture. Condensation of a diatomic halogen compound from the mixture may also contribute to the separation. The separation of hydrogen product from the mixture can form a separate process step; preferably however the separation is integrated with the dissociation step.

The process typically provides a product stream of hydrogen gas that can be stored, transported and/or used in other processes. The process may comprise a post-treatment, such as purification, for example to remove hydrogen halide contaminations from the obtained product stream of hydrogen gas. A post-treatment of the hydrogen product may for example comprise reactive adsorption, such as using CaO. The hydrogen product is typically cooled.

The process preferably comprises recycling the halogen compounds by adding the diatomic halogen compounds obtained by the dissociation of hydrogen halide to the liquid phase to be contacted with the feed stream. Therefore, the process preferably comprises adding said diatomic halogen compound obtained from said step of dissociating of hydrogen halide to a process stream comprising organic solvent obtained from said separating hydrogen halide and organic solvent, to provide a recycled process stream comprising said diatomic halogen compound dissolved in said organic solvent, wherein the process further comprises using said recycled process stream at least partly as liquid phase that is contacted with the feed stream.

The process optionally further comprises balancing the amount of solvent. This may comprise adding solvent to a process stream, typically upstream of the contacting, for example to the recycled stream. Solvent can be added to replenish the solvent and to balance for loss of solvent during the contacting, for example by evaporation of solvent into the feed stream and loss of solvent present in the sulfur product. The process may comprise replenishing the diatomic halogen compound, for example to balance for loss of the diatomic halogen compound or other halogen compounds into the feed stream and/or sulfur product stream.

Preferably, the process comprises heat recovery from the recycled process stream, wherein said heat recovery is upstream of said contacting with the feed stream. The process may also comprise heat recovery from the stream comprising the diatomic halogen compounds obtained by the dissociation of hydrogen halide, upstream of a step of adding said stream to said stream comprising organic solvent obtained from said separating hydrogen halide and organic solvent. Heat can for example be recovered by heat exchange between these streams and the stream rich in hydrogen halide to be heated and/or a fluid stream to be subjected to distillation to separate hydrogen halide from organic solvent.

The process of the invention can be integrated with a hydrodesulfurization process. Such a hydrodesulfurization process involves hydrogenolysis of sulfur-comprising compounds and is typically used to remove sulfur (S) from natural gas and from refined petroleum products such as gasoline or petrol, jet fuel, kerosene, diesel fuels and fuel oils. Therefore, preferably the feed stream is at least partly a product of a hydrodesulfurization process and the obtained hydrogen is preferably recycled at least partly to the hydrodesulfurization process.

This provides as advantage that a separate H₂ plant is not required, that CO₂ and H₂S removal processes can be decoupled, that no separate tail-gas treatment of the H₂S stream is needed and that a high purity sulfur product is obtained.

The process of the invention uses organic solvent. The solvent is preferably aprotic. Aprotic solvents provide as advantage that an azeotropic mixture of the solvent and the hydrogen halide can be avoided in a step of separating the hydrogen halide from the solvent, allowing for a more energy efficient separation and heating for example for thermal decomposition of the hydrogen halide. Preferably, the solvent is polar. Polar solvents advantageously allow for a high solubility of hydrogen disulfide, diatomic halogen, and hydrogen halide. Preferably, the solvent has a low cohesive energy density. More preferably, the organic solvent is aprotic, polar and has a low cohesive energy density.

More preferably, the solvent has one or more properties selected from: a solubility of H₂S at 25 °C of 0.3 mol/l or more, a solubility of I₂ at 25 °C of 1.0 mol/l or more, a solubility of HI at 25 °C of 2.0 mol/l or more, a boiling point of 100 °C or more, and a solubility of elemental sulfur at 25 °C of 0.1 mol/l or less. Even more preferably, the organic solvent has all these properties, preferably the solvent is in addition aprotic and polar. A high boiling point of the solvent indicates a low volatility and is advantageous to reduce loss of solvent into the feed stream. A high boiling point also typically allows for better separation of hydrogen halide from the solvent. The solvent may also comprise a mixture of organic solvent compounds, preferably aprotic polar solvent compounds having one or more of the above-mentioned properties.

Preferably, the organic solvent comprises one or more organic compounds selected from dialkylsulfoxides, organic amides, cyclic amides, cyclic urea, cyclic ketones, cyclic sulfones, aromatic compounds, (poly)siloxanes, (poly)alkylene glycols and alkylethers thereof, and carbonate esters derived from alkene glycols, more preferably organic amides, even more preferably cyclic organic amides. Typically, the organic solvent comprises 90 wt.% or more of these compounds.

Particularly preferred solvents include organic amides, preferably dimethylformamide (DMF) or dimethylacetamide (DMA). A highly preferred cyclic amide solvent is *N*-methyl-2-pyrrolidone (NMP). Another preferred solvent is a dialkylsulfoxide, preferably dimethylsulfoxide. Preferred cyclic urea solvents include 1,3-dimethyl-3,4,5,6-tetrahydro-2(1*H*)-pyrimidinone (DMPU) and 1,3-dimethyl-2-imidazolidinone (DMI). Preferred cyclic ketones as solvent include cyclohexanone, preferred cyclic sulfones include 2,3,4,5-tetrahydrothiophene-1,1-dioxide (sulfolane). Preferred aromatic solvents include benzene, and substituted benzene compounds, for example substituted with C₁-C₆ hydrocarbon substituents, including toluene, xylene, and mesitylene. Preferred (poly)siloxanes include decamethyltetrasiloxane and octamethylcyclotetrasiloxane. Preferred solvents from the (poly)alkylene glycols and alkyl ethers thereof include dimethyl ethers of polyethylene glycol (for example Selexol™, commercially available from The Dow Chemical Company), and preferred carbonate esters derived from alkene glycols include propylene carbonate. These solvents advantageously allow for a fast reaction between H₂S and the diatomic halogen compound.

The organic solvent may comprise a mixture of organic solvent compounds, preferably a mixture of compounds selected from dialkylsulfoxides, organic amide, cyclic amides, cyclic urea, cyclic ketones, cyclic sulfones, aromatic compounds, (poly)siloxanes, (poly)alkylene glycols and alkylethers thereof, and carbonate esters derived from alkene glycols.

The solvent may comprise minor amounts of inorganic components, preferably less than 10 wt.%, other than sulfur compounds, hydrogen halide and diatomic halogen compound. The solvent may also comprise minor amounts of protic solvent compounds, preferably less than 10 wt.%. The liquid phase that is contacted with the feed stream comprises preferably less than 5 wt.% liquid protic components, wherein the components are liquid at the pressure and temperature of the contacting with the feed stream. In particular, the liquid phase preferably comprises less than 1 wt.% of water.

In a preferred process, the organic solvent is selected from organic amides and dialkylsulfoxide, preferably organic amides, more preferably cyclic organic amides such as NMP, and wherein the halogen is iodine, wherein the process comprises separating produced hydrogen halide from said organic solvent in said fluid stream by distillation, thereby providing a stream rich in hydrogen halide, which stream is gaseous and comprises hydrogen halide in an amount of 70-100 mol%, and which is subjected to said step of dissociating produced hydrogen halide, wherein said step of dissociating hydrogen halide comprises thermal decomposition, optionally using a catalyst, yielding a diatomic halogen compound and hydrogen gas, and wherein the process comprises heating said stream rich in hydrogen halide to increase the temperature of said stream with 50 °C or more.

For example, a preferred process according to the invention comprises contacting a gaseous feed stream comprising hydrogen sulfide with a solution of iodine (I₂) in a liquid organic amide in a gas/liquid contactor, at condition to cause absorption of hydrogen sulfide in the liquid organic amide and reaction with dissolved iodine to hydrogen iodide and elemental sulfur, removing at least part of the formed elemental sulfur, removing at least part of the formed hydrogen iodide from the solvent into a gaseous stream, heating said gas stream to cause thermal decomposition of gaseous hydrogen iodide into hydrogen gas (H₂) and iodine, separating formed hydrogen gas from the reaction mixture and recovering the hydrogen gas as product and recycling the organic amide solvent and the obtained iodine (I₂) to the gas/liquid contactor.

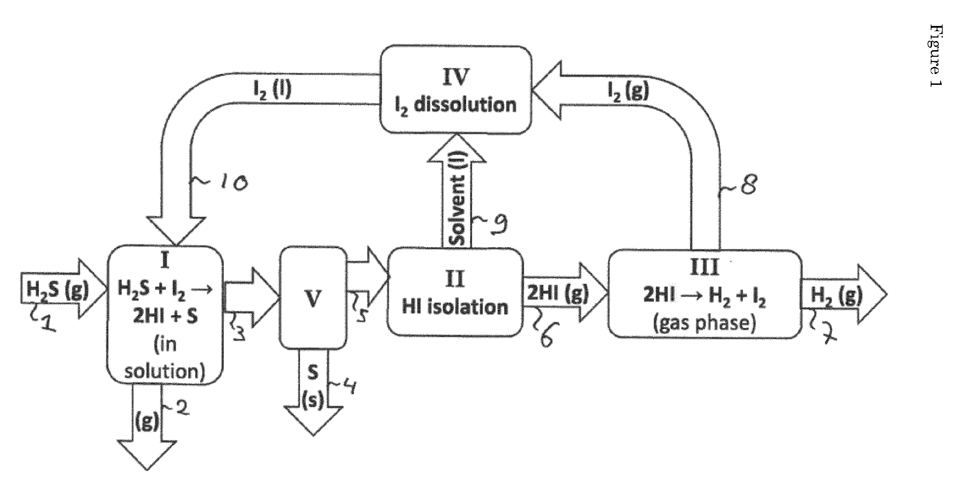

Figure 1 shows a process scheme of an exemplary embodiment of a process of the invention. Gaseous feed stream 1 comprising H₂S is contacted in step I with a stream 10 comprising a solution of iodine (I₂) in aprotic solvent. Stream 10 may comprise remaining and/or unreacted HI. Feed stream 1 becomes lean stream 2 lean in H₂S. Stream 2 can be further processed and vented. Liquid stream 3 comprises HI and a suspension of S and possibly also unreacted I₂. In separation step V stream 3 is separated in a solid sulfur product 4 and a liquid stream 5. Stream 5 comprises HI in solution and possibly some remaining sulfur and unreacted I₂. In HI isolation step II, a gaseous stream 6 comprising HI is produced by distillation from stream 5 and a liquid stream 9 comprising the solvent is obtained as residue. Stream 9 may further comprise remaining HI, remaining sulfur and unreacted I₂. In dissociation step III, gaseous HI from stream 6 is decomposed in the gas phase in hydrogen gas and iodine gas. The iodine gas and hydrogen gas are separated from each other and gaseous hydrogen product stream 7 and gaseous iodine stream 8 are obtained. Hydrogen gas 7 is collected as product and can be stored and/or used in other processes. Gaseous iodine 8 is dissolved in I₂ dissolution step IV to produce a liquid stream 10 comprising dissolved I₂. Stream 10 may further comprise unreacted HI and remaining sulfur. This stream 10 is recycled and brought in contact with the feed stream in step I.

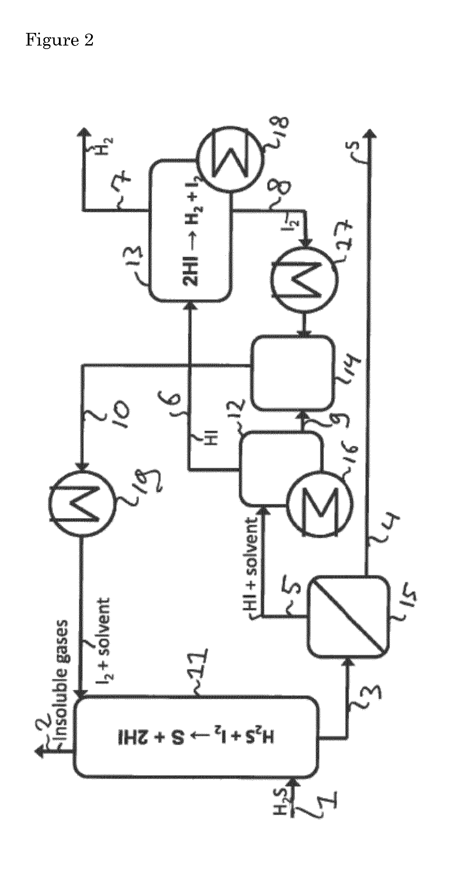

Figure 2 is a schematic illustration of an example of an installation for an exemplary process according to the invention. The installation comprises contacting unit 11 for gas/liquid contacting and is provided with an inlet for fluid connection 1 to a source of gaseous H₂S. Contacting unit 11 is provided with an outlet 2 for a gaseous stream lean in H₂S. The installation further comprises a solid/liquid separation unit 15 and fluid connection 3 between contacting unit 11 and solid/liquid separation unit 15 for a stream comprising solvent, HI and a suspension of sulfur. Separation unit 15 can be a filtration unit. Filtration unit 15 is provided with an outlet 4 for a slurry comprising the sulfur product. The installation further comprises a distillation unit 12 and a fluid connection 5 for the liquid stream comprising HI and solvent between solid/liquid separation unit 15 and distillation unit 12. Distillation unit 12 comprises heat exchanger 16 for heating stream 5. The installation further comprises a gas phase reaction chamber 13 provided with a catalyst for HI dissociation. The installation further comprises a fluid connection 6 for a gaseous stream comprising HI between distillation unit 12 and reaction chamber 13. Reaction chamber 13 further comprises a heat exchanger 18 for heating a gaseous mixture comprising HI to be dissociated. Reaction chamber 13 is provided with an outlet 7 for a gaseous stream comprising H₂ that is obtained as product and may comprise a fluid connection with units for further processing of the H₂ product. The installation comprises a mixing unit 14 and a fluid connection 8 between the reaction chamber 13 and mixing unit 14 for a stream comprising I₂. Fluid connection 8 is provided with heat exchanger 17 for heat recovery from the stream comprising I₂. The installation further comprises a fluid connection 9 between distillation unit 12 and mixing unit 14 for a liquid stream comprising solvent and possibly remaining HI. The installation further comprises a fluid connection 10 between mixing unit 14 and contacting unit 11 for a stream comprising I₂ and solvent. Fluid connection 10 is provided with heat exchanger 19 for heat recovery from the stream comprising I₂ and solvent. The installation may further comprise an inlet for a replenishing stream of solvent and/or iodine at fluid connection 10 or contacting unit 11.

The invention will now be illustrated by the following nonlimiting example.

### Example

First, an indication for the solubility of I₂ in the solvent dimethylformamide (DMF) was obtained by dissolving known amounts of solid I₂ into a known amount of solvent, and visually inspecting the obtained solution for the presence of any undissolved solid particles. This experiment was performed at room conditions, meaning a pressure of about 1 atm, and a temperature of about 20 °C. No solids were observed after adding 40.1 grams of I₂ to 13.7 grams of DMF. This indicates that the I₂ solubility of in DMF is at least 10.5 mol/liter at room conditions.

Secondly, the reaction between dissolved I₂ and gaseous H₂S was performed at room conditions. A gas mixture containing 5000 ppmv of H₂S was continuously added to 50 ml of DMF containing 0.25 mol/liter of dissolved I₂. The gas was dispersed into the liquid as small bubbles using a sparger. The contact time between the gas and the liquid was less than 1 second. At given time intervals, the solution was inspected by eye and the H₂S concentration in the outlet gas was measured using gas-chromatography with a detection limit of 50 ppmv. The visual inspections showed the continuous formation of yellow solid particles that started accumulation at the bottom of the liquid, indicating the formation and precipitation of elemental sulfur. In addition, the color of the solution changed from deep red, caused by the dissolved I₂, to transparent yellow, caused by the disappearance of I₂ and the appearance of elemental sulfur. Results of the H₂S concentration measurements are shown in Table 1.

**Table 1**

| Time (min) | H₂S concentration (ppmv) |
|---|---|
| 0 | 0 |
| 35 | 0 |
| 60 | 0 |
| 90 | 0 |
| 120 | 0 |
| 150 | 0 |
| 165 | 0 |
| 195 | 236 |
| 210 | 457 |
| 220 | 1220 |
| 230 | 2039 |
| 245 | 3599 |
| 270 | 4694 |
| 295 | 4987 |

The measurements show that there was no H₂S present in the outlet gas stream during the first part of the experiment. During the second part of the experiment, the concentration increased from zero up to the inlet concentration of 5000 ppmv. According to stoichiometric calculations, all I₂ had reacted after about 245 minutes, which is very close to the time at which the measured H₂S outlet concentration was halfway between its initial and final values. These observations confirm a fast reaction between H₂S and I₂, even at relatively low liquid concentrations, and removal of H₂S down to a very low gas concentration.

## Claims

1. A process for treating a feed stream comprising hydrogen sulfide to produce hydrogen and sulfur, comprising:
a) contacting said feed stream with a liquid phase comprising a diatomic halogen compound dissolved in an organic solvent and reacting hydrogen sulfide with said diatomic halogen compound thereby producing hydrogen halide and sulfur in a fluid stream comprising said organic solvent,
b) dissociating produced hydrogen halide to provide a mixture comprising hydrogen and a diatomic halogen compound,
c) separating hydrogen from said mixture and collecting hydrogen as product, and
d) separating sulfur from a process stream comprising sulfur and organic solvent, and collecting sulfur as product.

2. Process according to claim 1, comprising separating produced hydrogen halide from said organic solvent in said fluid stream by distillation, thereby providing a stream rich in hydrogen halide, which stream is gaseous and comprises hydrogen halide in an amount of 70-100 mol%, and which is subjected to said step of dissociating produced hydrogen halide.

3. Process according to claim 1 or 2, wherein said step of dissociating hydrogen halide comprises thermal decomposition, optionally using a catalyst, yielding a diatomic halogen compound and hydrogen gas.

4. Process according to any one of claims 1- 3, comprising heating said stream rich in hydrogen halide to increase the temperature of said stream with 50 °C or more.

5. Process according to any one of claims 1-4, wherein the feed stream is gaseous and comprises hydrogen sulfide in an amount of 1-100 mol.% and wherein the process comprises reducing the hydrogen sulfide content of the feed stream to provide a gaseous stream comprising hydrogen sulfide in an amount of less than 10 ppm by volume and/or in a concentration of less than 1 % of the concentration of hydrogen sulfide in the feed stream.

6. Process according to any one of claims 1-5, wherein the process further comprises adding said diatomic halogen compound obtained from said step of dissociating hydrogen halide to a process stream comprising organic solvent obtained from said separating hydrogen halide and organic solvent, to provide a recycled process stream comprising said diatomic halogen compound dissolved in said organic solvent, wherein the process further comprises using said recycled process stream at least partly as liquid phase that is contacted with the feed stream.

7. Process according to claim 6, comprising heat recovery from the recycled process stream, wherein said heat recovery is upstream of said contacting with the feed stream.

8. Process according to any one of claims 1-7, wherein the feed stream is at least partly a product of a hydrodesulfurization process and wherein the obtained hydrogen is recycled at least partly to said hydrodesulfurization process.

9. Process according to any one of claims 1-8, wherein said halogen is iodine.

10. Process according to any one of claims 1-9, wherein said organic solvent is aprotic, polar, and has one or more properties selected from: a solubility of H₂S at 25 °C of 0.3 mol/l or more, a solubility of I₂ at 25 °C of 1 mol/l or more, a solubility of HI at 25 °C of 2 mol/l or more, a boiling point of 100 °C or more, and a solubility of elemental sulfur at 25 °C of 0.1 mol/l or less.

11. Process according to any one of claims 1-10, wherein said organic solvent comprises one or more organic compounds selected from dialkylsulfoxides, organic amides, cyclic amides, cyclic urea, cyclic ketones, cyclic sulfones, aromatic compounds, (poly)siloxanes, (poly)alkylene glycols and alkylethers thereof, and carbonate esters derived from alkene glycols.

12. Process according to claim 11, wherein said organic solvent comprises an organic amide, preferably dimethylformamide or dimethylacetamide.

13. Process according to claim 11 or 12, wherein said organic amide is a cyclic organic amide, preferably *N*-methyl-2-pyrrolidone.

14. Process according to any one of claim 1-13, wherein said liquid phase comprises less than 5 wt.% liquid protic compounds.

15. Process according to any of claims 2-8, wherein the organic solvent is selected from organic amides and dialkylsulfoxide and wherein the halogen is iodine,
wherein the process comprises separating produced hydrogen halide from said organic solvent in said fluid stream by distillation, thereby providing a stream rich in hydrogen halide, which stream is gaseous and comprises hydrogen halide in an amount of 70-100 mol%, and which is subjected to said step of dissociating produced hydrogen halide,
wherein said step of dissociating hydrogen halide comprises thermal decomposition, optionally using a catalyst, yielding a diatomic halogen compound and hydrogen gas,
and wherein the process comprises heating said stream rich in hydrogen halide to increase the temperature of said stream with 50 °C or more.
